# EUROPÄISCHE PATENTSCHRIFT

(11) **EP 1 632 340 B1**
(45) Veröffentlichungstag und Bekanntmachung des Hinweises auf die Patenterteilung: **19.03.2008**
(21) Anmeldenummer: 05108032.3
(22) Anmeldetag: 02.09.2005
(51) Int. Cl.: B32B 5/26, D04H 13/00, A41D 31/00, A61F 13/00

(54) **Schutzbekleidung aus einer mehrschichtigen Textilie**
Protective garments made of a multilayered textile
Vêtement de protection constitue d'une matière textile multicouche

(30) Priorität: 04.09.2004 DE 102004042836
(43) Veröffentlichungstag der Anmeldung: 08.03.2006
(73) Patentinhaber: Innovatec Microfibre Technology GmbH & Co.KG, 53840 Troisdorf (DE)
(72) Erfinder: Fischer, Jörg, 4548, Mülheim/Ruhr (DE)
(74) Vertreter: Grundmann, Dirk

(56) Entgegenhaltungen:
- WO-A-96/33626
- WO-A-99/25551

## Beschreibung

Die Erfindung betrifft eine Schutzkleidung aus einer mehrschichtigen Textilie gemäß Gattungsbegriff des Anspruchs 1.

Aus der gattungsbildenden EP 0 824 324 B1 ist ein flüssigkeitsverteilendes Kleidungsstück, welches unter einer undurchlässigen Schutzkleidung getragen wird, vorbekannt. Diese Unterbekleidung hat einen mehrschichtigen Aufbau. Unter anderem weist sie einen hydrophil umgewandelten Verstärkungsstoff auf. Darüber hinaus besitzt diese Textilie einen saugfähigen Vliesstoff. Vorgesehen ist ferner ein supersaugfähiger Absorber zur Aufnahme von Flüssigkeit.

Eine Schutzbekleidung wird von der nicht vorveröffentlichten DE 103 18 351.5 beschrieben. Die dort beschriebene Schutzkleidung besteht aus einer vierlagigen Textilie. Eine innere Lage wird von einem Polypropylen-Spinnvlies gebildet. Auf dieser inneren Lage ist eine mikrofeine, hochdichte aber wasserdampfundurchlässige Meltblownschicht aufgebracht. Auf dieser zweiten Schicht ist eine weitere Polypropylen-Spinnvliesschicht aufgebracht, so dass das hydrophil ausgerüstete Meltblown zwischen zwei Polypropylen-Spinnvliesen liegt. Kleidungsaußenseitig ist eine mikroporöse Folie aus Polypropylen oder Polyethylen vorgesehen. Die mikroporöse Außenschicht macht die Schutzbekleidung flüssigkeits- und insbesondere wasserdicht. Sie ist aber gleichwohl wasserdampfdurchlässig. Die hydrophile Mittelschicht dient der Aufnahme von Wasserdampf. Sie kann ein Vielfaches ihres Eigengewichtes an Wasserdampf aufnehmen.

Die EP 0 541 206 B1 beschreibt einen Textilverbundstoff, wobei eine innere Textilschicht hydrophil ausgerüstet ist.

Die EP 0 690 163 befasst sich mit einer Schutzkleidung, deren Oberseite und Unterseite aus einem Vlies hergestellt ist. Zwischen den beiden Vliesschichten soll ein Meltblown-Vlies angeordnet sein.

Ausgehend von der eingangs genannten DE 103 18 351 liegt der Erfindung die Aufgabe zugrunde, die dort beschriebene Schutzbekleidung weiter zu vereinfachen, ohne dass der Tragekomfort und die Schutzwirkung beeinträchtigt wird.

Gelöst wird die Aufgabe durch die in den Ansprüchen angegebene Erfindung.

Der Anspruch 1 sieht zunächst und im Wesentlichen vor, dass die Schutzbekleidung einen lediglich dreischichtigen Aufbau besitzt. Die körperinnenliegende Schicht ist nach wie vor ein Spinnvlies. Auf diesem Spinnvlies ist ein mikrofeines, hochdichtes aber wasserdampfdurchlässiges Meltblown aufgebracht. Dieses ist in der bewährten Weise derart hydrophil ausgerüstet, dass seine Flüssigkeitsaufnahmefähigkeit ein Vielfaches des eigenen Gewichtes und vorzugsweise mehr als 500 % des eigenen Gewichtes beträgt. Es wird als wesentlich angesehen, dass im Gegensatz zum gattungsbildenden Stand der Technik auf die zweite Spinnvliesschicht völlig verzichtet werden kann. Dies ist deshalb möglich, weil die außenliegende mikroporöse Folie unmittelbar auf das wasserdampfdurchlässige Meltblown aufgebracht ist.

Bevorzugt ist die Mittelschicht, die von dem Meltblown gebildet ist, derart hydrophil ausgerüstet, dass sie mehr als 100 %, 200 %, 300 %, 400 %, 500 %, 600 %, ja sogar mehr als 700 % bzw. 800 % ihres eigenen Gewichtes an Flüssigkeit, nämlich Wasser aufnehmen kann. Die Flüssigkeit, die durch die körperinnenliegende Schicht in das Meltblown als Wasserdampf oder auch als aufgesaugter Schweiß gelangt, kann dort zwischengespeichert werden. Dieses erhöht den Tragekomfort. Die Wasserdampfdurchlässigkeit der außenliegenden mikroporösen Folie erlaubt die Abgabe dieser zwischengespeicherten Flüssigkeit an die Umgebung. Die hydrophile Ausrüstung der mittleren Lage geschieht über Masterbatches. Es handelt sich hierbei um ein Additiv in Granulatform, welches dem das Meltblown bildenden Granulat beigegeben wird. Vorzugsweise handelt es sich hier um langkettige Seifen.

Die Textilie, aus welcher die Schutzkleidung gefertigt wird, kann im Endlosverfahren hergestellt werden. Zunächst wird das körperinnenliegende Spinnvlies aus PE, PP oder PES oder einem anderen brauchbaren Material gefertigt. Es handelt sich dabei um gelegte, kalandrierte Mikrofasern einer Faserstärke von 10 bis 15 Mikrometern.

Auf dieses Substrat wird sodann das Meltblown aufgesprüht. Dies erfolgt im flüssigen Zustand. Das Material für das Meltblown kann PP oder PE oder eine andere brauchbare Substanz sein. Zufolge einer mechanischen, insbesondere hydromechanischen Fadenstreckung besitzt das das Meltblown bildende Material nur ein Zehntel der Fadenstärke wie das Substrat, nämlich 2 bis 4 Mikrometer. Zufolge der hydrophilen Ausrüstung kann das Meltblown die oben erwähnten Flüssigkeitsmengen aufnehmen.

Auf das aufgesprühte Meltblown wird eine mikroporöse Folie aufgebracht. Es handelt sich hierbei um eine wasserdichte aber wasserdampfdurchlässige Folie. Diese kann aus PP oder PE oder dergleichen bestehen. Die Wasserdampfdurchlässigkeit wird durch eine Mikroperforierung erreicht. Hierzu wird die extrudierte Folie axial oder biaxial gereckt. Zufolge einer Kalziumbikarbonatfüllung von bis zu 70 % entstehen kleine Poren in der Folie, die Wasser nicht durchlassen, wohl aber den Wasserdampf.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Schutzbekleidung aus einer mehrschichtig aufgebauten Textilie, wobei die innenliegende Schicht ein Spinnvlies ist, eine mittlere Schicht ein mikrofeines, hochdichtes aber wasserdampfdurchlässiges Meltblown ist, das derartig hydrophil ausgerüstet ist, dass seine Flüssigkeitsaufnahmefähigkeit ein Vielfaches des eigenen Gewichtes beträgt, **gekennzeichnet durch** einen lediglich dreischichtigen Aufbau, wobei das Meltblown unmittelbar zwischen Spinnvlies und einer außenliegenden mikroporösen Folie angeordnet ist.

2. Schutzbekleidung nach Anspruch 1, **dadurch gekennzeichnet, dass** die hydrophile Ausrüstung im Wege einer Granulatbeimischung oder der Sprühausrüstung erfolgt.

3. Schutzbekleidung nach einem der vorangehenden Ansprüche, **dadurch gekennzeichnet, dass** die von dem Meltblown aufgenommene Feuchtigkeit kontrolliert über die äußere mikroporöse Folie an die Umgebung abgebbar ist.

4. Schutzbekleidung nach einem der vorangehenden Ansprüche, **dadurch gekennzeichnet, dass** die Flüssigkeitsaufnahmefähigkeit des Meltblown mindestens mehr als 100 %, 200 %, 300 %, 400 %, bevorzugt 500 % des eigenen Gewichtes beträgt.

5. Schutzbekleidung nach einem der vorangehenden Ansprüche, **dadurch gekennzeichnet, dass** das Spinnvlies aus PE, PP, oder PES besteht.

6. Schutzbekleidung nach einem oder mehreren der vorangehenden Ansprüche, **dadurch gekennzeichnet, dass** die Faserstärke des Spinnvlieses zwischen 10 und 15 Mikrometern beträgt.

7. Schutzbekleidung nach einem der vorangehenden Ansprüche, **dadurch gekennzeichnet, dass** das Meltblown auf das Spinnvlies aufgesprüht ist.

8. Schutzbekleidung nach einem der vorangehenden Ansprüche, **dadurch gekennzeichnet, dass** das Meltblown eine Fadenstärke zwischen 2 und 4 Mikrometern besitzt.

9. Schutzbekleidung nach einem der vorangehenden Ansprüche, **dadurch gekennzeichnet, dass** das Meltblown aus Polypropylen oder Polyethylen besteht.

10. Schutzbekleidung nach einem der vorangehenden Ansprüche, **dadurch gekennzeichnet, dass** die auf das aufgesprühte Meltblown aufgebrachte mikroporöse Folie aus Polypropylen, Polyethylen besteht und die Wasserdampfdurchlässigkeit durch eine Mikroperforierung erreicht ist.

11. Schutzbekleidung nach einem der vorangehenden Ansprüche, **dadurch gekennzeichnet, dass** die Folie zwecks Erreichen der Mikroperforierung axial oder biaxial gereckt ist.

## Claims

1. Protective clothing made from a textile of multi-layered structure, wherein the inner-lying layer is a spun-bonded nonwoven, a central layer is a micro-fine, high-density but water vapour-permeable melt-blown, which is finished to be hydrophilic such that its liquid absorption capacity is a multiple of its own weight, **characterised by** an only three-layered structure, wherein the melt-blown is arranged directly between spun-bonded nonwoven and an outer-lying microporous film.

2. Protective clothing according to claim 1, **characterised in that** the hydrophilic finishing is effected by way of a granule admixture or spray finishing.

3. Protective clothing according to one of the preceding claims, **characterised in that** the moisture absorbed by the melt-blown can be released to the environment in controlled manner via the outer microporous film.

4. Protective clothing according to one of the preceding claims, **characterised in that** the liquid absorption capacity of the melt-blown is at least more than 100%, 200%, 300%, 400%, preferably 500% of its own weight.

5. Protective clothing according to one of the preceding claims, **characterised in that** the spun-bonded nonwoven consists of PE, PP, or PES.

6. Protective clothing according to one or more of the preceding claims, **characterised in that** the fibre thickness of the spun-bonded nonwoven is between 10 and 15 micrometres.

7. Protective clothing according to one of the preceding claims, **characterised in that** the melt-blown is sprayed onto the spun-bonded nonwoven.

8. Protective clothing according to one of the preceding claims, **characterised in that** the melt-blown has a thread thickness between 2 and 4 micrometres.

9. Protective clothing according to one of the preceding claims, **characterised in that** the melt-blown consists of polypropylene or polyethylene.

10. Protective clothing according to one of the preceding claims, **characterised in that** the microporous film applied to the sprayed-on melt-blown consists of polypropylene, polyethylene and the water-vapour permeability is achieved by microperforation.

11. Protective clothing according to one of the preceding claims, **characterised in that** the film is stretched axially or biaxially for the purpose of achieving microperforation.

## Revendications

1. Vêtement de protection composé d'une matière textile multicouche, la couche intérieure étant un non-tissé, une couche médiane étant un Meltblown microfin, de haute densité mais perméable à la vapeur d'eau, rendue hydrophile, de manière que son pouvoir d'absorption en liquide soit un multiple du poids propre, **caractérisé par** une structure à trois couches seulement, Meltblown, étant disposé directement entre le non-tissé et une feuille microporeuse placée extérieurement.

2. Vêtement de protection selon la revendication 1, **caractérisé en ce que** le traitement hydrophile s'effectue au cours d'un mélange avec du granulat ou au cours du traitement par pulvérisation.

3. Vêtement de protection selon l'une des revendications précédentes, **caractérisé en ce que** l'humidité captée par le Meltblown est susceptible d'être délivrée à l'ambiance de façon contrôlée par la feuille microporeuse extérieure.

4. Vêtement de protection selon l'une des revendications précédentes, **caractérisé en ce que** la capacité d'absorption en liquide du Meltblown est au moins supérieure à 100%, 200%, 300%, 400%, de préférence 500% du poids propre.

5. Vêtement de protection selon l'une des revendications précédentes, **caractérisé en ce que** le non-tissé est composé de PE, PP ou PES.

6. Vêtement de protection selon l'une des revendications précédentes, **caractérisé en ce que** l'épaisseur de fibre du non-tissé est comprise entre 10 et 15 micromètres.

7. Vêtement de protection selon l'une des revendications précédentes, **caractérisé en ce que** le Meltblown est appliqué par pulvérisation sur le non tissé.

8. Vêtement de protection selon l'une des revendications précédentes, **caractérisé en ce que** le Meltblown présente une épaisseur de fil entre 2 et 4 micromètres.

9. Vêtement de protection selon l'une des revendications précédentes, **caractérisé en ce que** le Meltblown est composé de polypropylène ou de polyéthylène.

10. Vêtement de protection selon l'une des revendications précédentes, **caractérisé en ce que** la feuille microporeuse appliquée sur le Meltblown appliqué par pulvérisation est composée de polypropylène, polyéthylène et la perméabilité à la vapeur d'eau est obtenue grâce à une micro-perforaction.

11. Vêtement de protection selon l'une des revendications précédentes, **caractérisé en ce que** la feuille est étirée axialement ou biaxialement, dans le but d'obtenir la micro-perforation.
